# EUROPÄISCHE PATENTSCHRIFT

(11) **EP 2 730 456 B1**
(45) Veröffentlichungstag und Bekanntmachung des Hinweises auf die Patenterteilung: **26.04.2017**
(21) Anmeldenummer: 12191662.1
(22) Anmeldetag: 07.11.2012
(51) Int. Cl.: B60N 2/06

(54) **Antrieb einer Sitzverstelleinrichtung für Kraftfahrzeuge**
Drive for a seat adjusting device for motor vehicles
Entraînement d'un dispositif de réglage de siège pour véhicules automobiles

(43) Veröffentlichungstag der Anmeldung: 14.05.2014
(73) Patentinhaber: IMS Gear SE & Co. KGaA, 78166 Donaueschingen (DE)
(72) Erfinder: Geiges, Christian, 78176 Blumberg (DE)
(74) Vertreter: Westphal, Mussgnug & Partner Patentanwälte mbB

(56) Entgegenhaltungen:
- EP-A1- 2 191 999
- DE-A1-102010 063 044
- DE-C1- 10 003 305
- FR-A1- 2 882 974
- US-A1- 2011 278 419

## Beschreibung

Die Erfindung betrifft eine Sitzverstelleinrichtung für Kraftfahrzeuge mit einer Spindel, welche an einer ersten von zwei relativ zueinander verstellbaren Schienen mittels mindestens einer endseitig an der Spindel befindlichen Halterung befestigt ist, und mit einem von einem Motor antreibbaren Getriebe, das an der zweiten Schiene angeordnet ist.

Ein solche Sitzverstelleinrichtung ist in EP 1 068 093 B1 beschrieben. Der Antrieb ist in der dortigen und in der vorliegenden Figur 1 dargestellt. Wie ersichtlich, ist eine Halteplatte 1, auf der der Sitz eines Kraftfahrzeuges zu befestigen ist, einer Oberschiene 3 zugeordnet. An der Halteplatte 1 sind Befestigungslaschen 11 für einen Motor 2 vorgesehen, sodass dieser fest mit der Halteplatte 1 und damit fest mit der Oberschiene verbunden werden kann. Beidseitig am Motor 2 sind Antriebswellen 21, 22 angeordnet. Hierzu können flexible Wellen verwendet werden. Diese Antriebswellen 21, 22 stellen die Verbindung zu einem Getriebe 9 her, das in der EP 1 068 093 B1 ausführlich beschrieben ist.

Die Oberschiene 3 gleitet direkt oder über nicht dargestellte Verstell- und/oder Lagerelemente auf einer am Fahrzeugboden des Kraftfahrzeuges festgelegten Unterschiene 4.

In Funktionslage der Oberschiene 3 und Unterschiene 4 werden diese durch ihre Berührungs- bzw. Lagerungsbereiche so gehalten, dass sich ein Hohlraum ergibt. Innerhalb dieses Hohlraumes ist eine Gewindespindel 5 angeordnet. Diese Gewindespindel 5 wird zwischen Halterungen 6a und 6b aufgenommen, die auf der Unterschiene 4 fest angeordnet sind. Hierfür verfügen die Halterungen 6a und 6b über Befestigungslöcher 6e, durch welche geeignete Schraubverbindungen oder ähnliche Befestigungsmittel ragen und an Befestigungslöchern 4a der Unterschiene 4 gehalten werden. Die Spindel 5 ist selbst über geeignete Befestigungsmuttern 6c, 6d an die Halterungen 6a und 6b festgeschraubt.

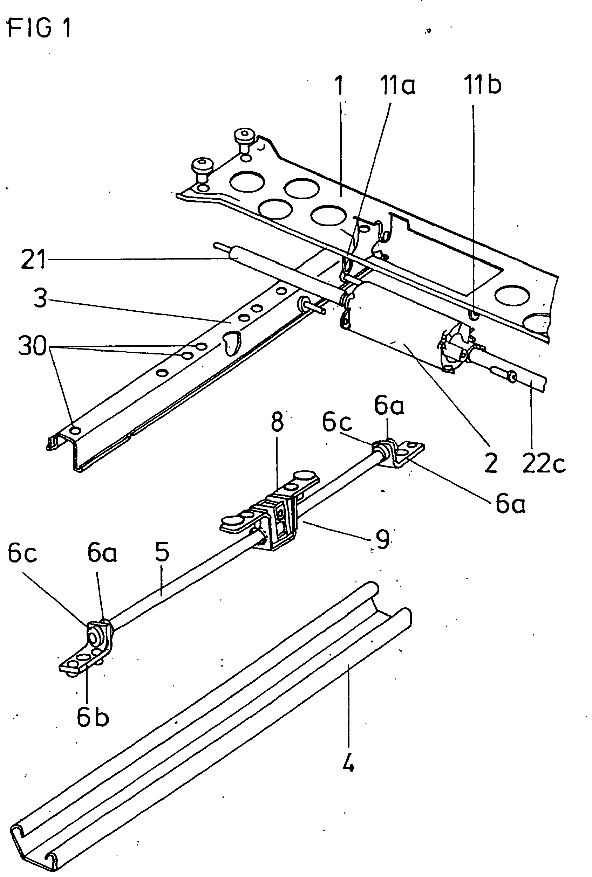

Problematisch bei dem in Figur 1 dargestellten Antrieb ist die Gestaltung der Halterungen 6a und 6b.

Diese L-förmig gestalteten Halterungen 6a, 6b werden regelmäßig als Stanzbiegeteile hergestellt. Dabei werden die Halterungen zunächst als streifenförmige Elemente aus Metallplatten herausgestanzt und anschließend im rechten Winkel gebogen. Solche Stanzbiegeteile sind zwar in der Herstellung verhältnismäßig einfach und damit preisgünstig. Nachteilig ist jedoch die zu geringe Festigkeit dieser Halterungen. Solche Stanzbiegeteile können nämlich nur begrenzte Kräfte im Crashfall aufnehmen. Es hat sich in Versuchen herausgestellt, dass solche Stanzbiegeteile im Crashfall verhältnismäßig geringe Kräfte von bi zu etwa 20 kN verkraften können.

Hier setzt die vorliegende Erfindung an.

Die US2011/278419 zeigt eine Sitzverstelleinrichtung mit den Merkmalen des Oberbegriffs des Anspruchs 1. Die Erfindung hat das Ziel, die bekannte Sitzverstelleinrichtung so weiterzubilden, dass im Crashfall von der oder den Halterungen höhere Kräfte aufgenommen werden können als dies bisher der Fall war.

Dieses Ziel wird erreicht durch eine Sitzverstelleinrichtung mit den Merkmalen des Anspruchs 1.

Weiterbildungen der Erfindung sind Gegenstand der Unteransprüche.

Die Erfindung besteht im Wesentlichen darin, dass die Halterung ein Teil als Grundplatte aufweist, von welcher sich zwei zueinander beabstandete Wände nach oben wegerstrecken und mindestens eines der Enden der Spindel zwischen diesen beiden Wänden festgelegt, vorzugsweise festgeschweißt ist, wobei die beiden Wände der Halterung die beiden Längsschenkel eines U-Bügels sind, welche in zwei zueinander beabstandete Schlitze, die mindestens annähernd achsparallel zu der Spindelachse verlaufen, die geführt sind, und diese Schlitze in die Grundplatte eingearbeitet sind. Dabei ist der U-Bügel von unterhalb der Grundplatte mit seinen beiden Längsschenkel derart durch die Schlitze der Grundplatte geschoben, dass sich ein Querschenkel des U-Bügels, welcher die beiden Längsschenkel an ihrer Unterseite verbindet, in Anlage zu der Unterseite der Grundplatte befindet.

In einer bevorzugten Ausführungsform der Erfindung sind die Wände achsparallel zu der Spindelachse ausgerichtet und haben etwa die halbe Länge der Grundplatte.

In einer Weiterbildung der Erfindung ist vorgesehen, dass die Grundplatte eine Ausnehmung an ihrer Unterseite aufweist, in welcher der Querschenkel des U-Bügels eingreift. Hierdurch kann die Unterseite der gesamten Halterung mindestens annähernd eine plane Unterseite aufweisen, so dass die Halterung auf einer Unterlage gut aufsitzen kann und nicht verkippt.

In einer anderen Weiterbildung der Erfindung ist vorgesehen, dass die Grundplatte genau an der Stelle, wo die oben besprochen Ausnehmung sitzt, eine Erhöhung auf ihrer Oberseite aufweist.

Bei dieser Ausführungsform wird die Grundplatte von ihrer Unterseite her mit einem geeigneten Stempel geprägt, so dass auf der Unterseite die Ausnehmung und eine entsprechende Erhöhung auf der Oberseite der Grundplatte entsteht.

Eine weitere Ausführungsform der Erfindung sieht vor, dass die Grundplatte und der U-Bügel miteinander feststehend verbunden sind, insbesondere verschweißt, verklebt, verstemmt oder vertoxt. Unter Vertoxen (auch "Toxen" oder "Clinchen" genannt) ist dabei ein Durchsetzfügeverfahren für das Verbinden von Blechen und Profilen zu verstehen. Bei diesem Verfahren werden ohne Zusatz - oder Hilfsfügeteile unlösbare Verbindungen durch lokale Kaltumformung hergestellt. Die Hauptcharakteristik dieser Fügetechnik besteht darin, dass die formschlüssige Verbindung aus dem Werkstoff der zu verbindenden Bleche bzw. Metallteile geformt wird. Die bekannten Arbeitsschritte beim Vertoxen bestehen aus dem Einlegen der Fügeteile zwischen Stempel und Matritze und dem anschließenden Einpressen der verbindenden Materialien durch den Stempel in der Matritze. Bei weiterem Kraftaufbau fließt das stempelseitige Material in die Matritzenform. Als Ergebnis entsteht eine punktförmige Verbindung ohne Kanten und Grate. Ein besonderer Vorteil des Vertoxens ist darin zu sehen, dass eine hervorragende Korrosionsbeständigkeit bei galvanisierten und lackierten Blechen bzw. Metallteilen erhalten bleibt, da die Schutzschicht mitfließt.

Bei der ebenfalls möglichen Verbindungstechnik des Verstemmens handelt es sich um ein ähnliches Verfahren, dessen Unterschied zum Vertoxen jedoch darin besteht, dass keine punktförmige, sondern eine längliche, sickenartige Verbindung der zu verbindenden Blech- bzw. Metallteile mit weniger scharfen Kanten entsteht.

In einer anderen Weiterbildung der Erfindung ist vorgesehen, dass die Grundplatte und/oder der U-Bügel aus Metall, insbesondere Stahl bzw. Stahlblech oder Metallguss bestehen. Dabei können die Grundplatte und der U-Bügel aus dem gleichen Material oder aus unterschiedlichem Material gebildet sein.

Zur Befestigung einer so gestalten Halterung zur Aufnahme eines Endes der Spindel, ist in die Grundplatte mindestens eine Bohrung, vorzugsweise zwei Bohrungen eingearbeitet. Bei zwei Bohrungen liegen die Bohrungen in Spindelachse gesehen nebeneinander in Längsrichtung zur Spindelachse.

Zweckmäßigerweise weist die Grundplatte eine rechteckförmige Außenkontur auf.

Der wesentliche Vorteil einer solchen Halterung, die gemäß der oben erwähnten Weiterbildung zweiteilig ausgebildet ist, nämlich mit einer Grundplatte mit Schlitzen und einem in die Schlitze eingesetzten U-Bügel besteht darin, dass eine solche Halterung sowohl bauraumoptimiert ist als auch eine zusätzliche Festigkeitssteigerung eines Sitz-Längs-Verstellantriebes gewährleistet. Diese höhere Festigkeit ist bei einer gleichzeitigen höheren Steifigkeit der Halterung und bei einer geringeren Vorverlagerung gegeben. Die erfindungsgemäße Halterung bedarf nur eines kleinen Montageraums, zeichnet sich durch eine höhere Festigkeit aus und kann ohne weiteres bisher verwendet Halterungen ersetzen. Durch die Verwendung eines U-Bügels ist eine flexible Schnittstellengestaltung mit Hinblick auf eine Standardisierung der Verstellantriebe gewährleistet. Durch den Abstand der beiden von der Grundplatte hervorragenden Wände können verschiedene Durchmesser der Spindel berücksichtigt werden. Insgesamt zeichnet sich die erfindungsgemäße Halterung durch eine Reduzierung der Fertigungsschritte und damit durch niedrige Kosten aus.

Die Erfindung wird nachfolgend im Zusammenhang mit mehreren Figuren erläutert. Es zeigen:
- Figur 1: die bereits erläuterte Sitzverstelleinrichtung nach dem bekannten Stand der Technik mit einer an ihren Enden über Halterungen festgelegten Spindel, auf der ein längsverfahrbares Getriebe sitzt,
- Figur 2: den Teil einer Spindel ähnlich zu Figur 1, jedoch mit einer an einem Ende der Spindel festgelegten Halterung, die nach einem Ausführungsbeispiel der Erfindung gestaltet ist,
- Figuren 3 bis 5: die in Figur 2 gezeigte Halterung in unterschiedlichen Ansichten.

In den nachfolgenden Figuren bezeichnen, sofern nicht anders angegeben, gleiche Bezugszeichen gleiche Teile mit gleicher Bedeutung.

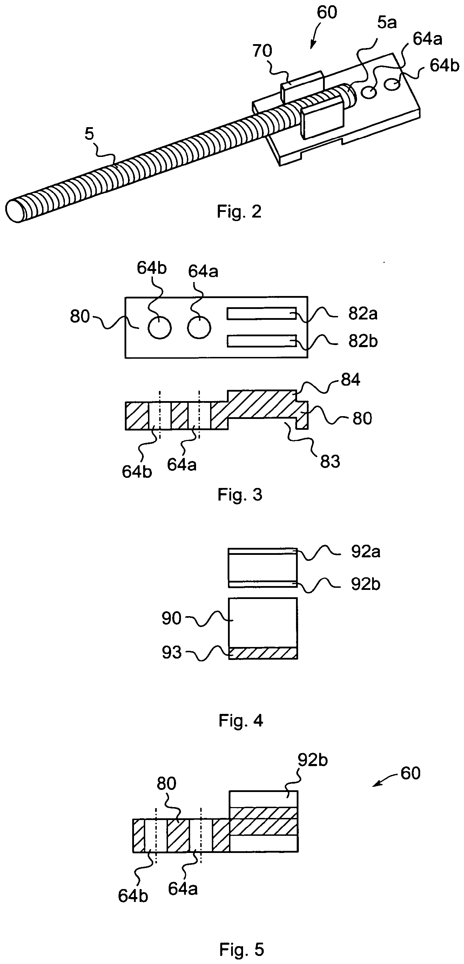

In Figur 2 ist, ähnlich wie in Figur 1, wiederum eine Spindel 5 dargestellt, allerdings nur im Bereich eines der beiden Enden der Spindel 5. Die übrigen Komponenten, insbesondere dass auf der Spindel 5 verfahrbare Getriebe 9 ist in Figur 2 der besseren Übersichtlichkeit weggelassen.

Im Gegensatz zur Darstellung von Figur 1 ist die Spindel 5 an ihrem Ende 5a mit einer besonders gestalten Halterung 60, die im Zusammenhang mit den Figuren 3 bis 5 noch näher erläutert wird, feststehend verbunden.

Die Halterung 60 verfügt über eine rechteckförmige Grundplatte aus Metall, insbesondere aus Stahl oder Stahlblech oder ähnlichem. Die Grundplatte ist mit den Bezugszeichen 80 versehen und verfügt, wie aus der Draufsicht von oben und der Seitenansicht von Figur 3 ersichtlich über zwei Befestigungsbohrungen 64a und 64b welche in Spindelachsrichtung der Spindel 5 nebeneinander angeordnet sind und zwar in der Darstellung von Figur 3 im linken Bereich der Grundplatte 80 befinden sich zwei zueinander beabstandete und ebenfalls parallel zur Spindelachse der Spindel 5 der verlaufende Schlitze 82a und 82b. Diese Schlitze 82a und 82b erstrecken sich über etwa die Hälfte oder mindestens annähernd die Hälfte der Grundplatte 80.

Aus der Schnittdarstellung von Figur 3 ist ersichtlich, dass die Grundplatte 80 in ihrem rechten Teil auf ihrer Unterseite eine Ausnehmung 83 und gegenüberliegend auf ihrer Oberseite eine entsprechende Erhöhung 84 aufweist. Diese Ausnehmung 83 und die entsprechende Erhöhung 84 kann durch ein geeignetes Stempelwerkzeug erzeugt werden, dass von unten her gegen die Grundplatte 80 gedrückt wird, um auf der Unterseite die Ausnehmung 83 und auf der Oberseite die entsprechende Erhöhung 84zu erzeugen.

In Figur 4 ist ein zweites Teil der Halterung 60 dargestellt, nämlich ein U-förmiger Bügel 90, der zwei gegenüberliegende Längsschenkel 92a, 92b aufweist, welche an ihrer Unterseite mit einem Querschenkel 93 verbunden sind. Der U-Bügel besteht wiederum vorzugsweise aus Metall, insbesondere Stahl oder Stahlblech oder ähnlichem.

Der U-Bügel 90 ist so gestaltet, dass er mit seinen Längsschenkeln 92a, 92b durch die in Figur 3 gezeigten Schlitze 82a, 82b der Grundplatte 80 gesteckt werden kann, so dass der Querschenkel 93 in der Ausnehmung 83 der Grundplatte 80 zu liegen.

In Figur 5 ist die Schnittansicht der aus den beiden Teilen Grundplatte 80 und U-Bügel 90 bestehenden Halterungen 60 in zusammengesteckten Zustand und in Schnittdarstellung gezeigt. Figur 2 zeigt diese Halterung 60 in perspektivischer Darstellung, wobei das Ende 5a der Spindel 5 zwischen den beiden Längsschenkeln 92a, 92b des U-Bügels 90 eingelegt und dort in geeigneter Weise festgelegt ist. Dieses Festlegen kann beispielsweise durch Verschweißung erfolgen. In Figur 2 ist beispielhaft die zugehörende Schweißnaht 70 zwischen der Spindel 5 und der Innenseite des Längsschenkels 92a angedeutet.

### Bezugszeichenliste

- 1: Halteplatte
- 2: Antriebsmotor
- 3: Obenschiene
- 4: Untenschiene
- 4a: Befestigungsloch
- 5: Spindel
- 5a: Spindelende
- 6: Halterung
- 6a: Halterung
- 6b: Halterung
- 6c: Befestigungsmutter
- 6d: Befestigungsmutter
- 8: Halterung
- 8a: Befestigungsloch
- 9: Getriebe
- 11: Befestigungslasche
- 21: Antriebswelle
- 22: Antriebswelle

- 60: Halterung
- 64a, 64b: Bohrungen

- 70: Schweißnaht

- 80: Grundplatte
- 82a, 82b: Schlitze
- 83: Ausnehmung
- 84: Erhöhung

- 90: U-Bügel
- 92a, 92b: Längsschenkel/Wände
- 93: Querschenkel

## Patentansprüche

1. Sitzverstelleinrichtung insbesondere für Kraftfahrzeuge mit einer Spindel (5), welche an einer ersten (4) von zwei relativ zueinander verstellbaren Schienen (3, 4) mittels mindestens einer endseitig an der Spindel (5) befindlichen, zur Sitzverstelleinrichtung gehörenden, Halterung (60) befestigbar ist, und mit einem von einem Motor (2) antreibbaren Getriebe (9), das an der zweiten Schiene (3) anordenbar ist, wobei die Halterung (60) ein Teil als Grundplatte (80) aufweist, von welcher sich zwei zueinander beabstandete Wände (92a, 92b) nach oben wegerstrecken, und wobei mindestens ein Ende (5a) der Spindel (5) zwischen diesen beiden Wänden (92a, 92b) festgelegt ist, **dadurch gekennzeichnet, dass** die beiden Wände (92a, 92b) zwei Längsschenkel eines zur Halterung (60) gehörenden U-Bügels (90) sind, dass die Grundplatte (80) zwei zueinander beabstandete Schlitze (82a, 82b) aufweist, die mindestens annähernd achsparallel zu einer Spindelachse der Spindel (5) verlaufen, und dass der U-Bügel (90) von unterhalb der Grundplatte (80) mit seinen beiden Längsschenkeln (92a, 92b) derart durch die Schlitze (82a, 82b) geschoben ist, dass sich ein Querschenkel (93) des U-Bügels (90) in Anlage zur Unterseite der Grundplatte (80) befindet.

2. Sitzverstelleinrichtung nach Anspruch 1,
**dadurch gekennzeichnet, dass** die Wände (92a, 92b) mindestens annähernd etwa die halbe Länge der Grundplatte (80) aufweisen.

3. Sitzverstelleinrichtung nach Anspruch 1 oder 2,
**dadurch gekennzeichnet, dass** die Grundplatte (80) eine Ausnehmung (83) an ihrer Unterseite aufweist, in welcher der Querschenkel (93) des U-Bügels (90) eingreift, so dass die Halterung (60) mindestens annähernd eine plane Unterseite aufweist.

4. Sitzverstelleinrichtung nach Anspruch 3,
**dadurch gekennzeichnet, dass** die Grundplatte (80) auf ihrer Oberseite eine Erhebung (84) aufweist, die der Ausnehmung (83) auf der Unterseite der Grundplatte (80) gegenüberliegt.

5. Sitzverstelleinrichtung nach einem der Ansprüche 1 bis 4,
**dadurch gekennzeichnet, dass** die Grundplatte (80) und der U-Bügel (90) miteinander feststehend verbunden sind, insbesondere verschweißt, verklebt, vertoxt oder verstemmt.

6. Sitzverstelleinrichtung nach einem der Ansprüche 1 bis 5,
**dadurch gekennzeichnet, dass** die Grundplatte (80) und/oder der U-Bügel (90) aus Metall, insbesondere Stahl, Stahlblech, Metallguss oder dergleichen besteht.

7. Sitzverstelleinrichtung nach einem der Ansprüche 1 bis 6,
**dadurch gekennzeichnet, dass** die Grundplatte (80) mindestens eine Bohrung (64a) vorzugsweise zwei Bohrungen (64a, 64b) aufweist, welche in Spindelachsrichtung gesehen nebeneinander angeordnet sind.

8. Sitzverstelleinrichtung nach einem der Ansprüche 1 bis 7,
**dadurch gekennzeichnet, dass** die Grundplatte (80) eine rechteckförmige Außenkontur aufweist.

## Claims

1. Seat adjustment device, in particular for motor vehicles, having a spindle (5) which is able to be attached to a first (4) of two rails (3, 4) which can be adjusted relative to each other by means of at least one bracket (60) located on the end side of the spindle (5) and belonging to the seat adjustment device, and having a gear (9) which is able be driven by a motor (2), said gear (9) being able to be arranged on the second rail (3), wherein
the bracket (60) has one part as a base plate (80), from which two walls (92a, 92b) which are distanced apart from each other extend upwards, and wherein at least one end (5a) of the spindle (5) is fixed between these two walls (92a, 92b),
**characterised in that**
the two walls (92a, 92b) are two longitudinal legs of a U-bolt (90) which belongs to the bracket (60), the base plate (80) has two slots (82a, 82b) which are distanced apart from each other and run at least approximately axially parallel to a spindle axis of the spindle (5), and the U-bolt (90) is pushed from below the base plate (80) with its two longitudinal legs (92a, 92b) through the slots (82a, 82b) in such a way that a transverse leg (93) of the U-bolt (90) is in contact with the lower side of the base plate (80).

2. Seat adjustment device according to claim 1,
**characterised in that**
the walls (92a, 92b) are at least approximately almost half the length of the base plate (80).

3. Seat adjustment device according to claim 1 or 2,
**characterised in that**
the base plate (80) has a recess (83) on its lower side with which the transverse leg (93) of the U-bolt (90) engages such that the bracket (60) at least approximately has a flat lower side.

4. Seat adjustment device according to claim 3,
**characterised in that**
the base plate (80) has an elevation (84) on its upper side which is opposite the recess (83) on the lower side of the base plate (80).

5. Seat adjustment device according to one of claims 1 to 4,
**characterised in that**
the base plate (80) and the U-bolt (90) are fixedly connected to each other, in particular welded, glued, clinched or caulked.

6. Seat adjustment device according to one of claims 1 to 5,
**characterised in that**
the base plate (80) and/or the U-bolt (90) consists of metal, in particular steel, sheet steel, metal casting or similar.

7. Seat adjustment device according to one of claims 1 to 6,
**characterised in that**
the base plate (80) has at least one bore (64a), preferably two bores (64a, 64b), which are arranged next to each other when seen in the spindle axis direction.

8. Seat adjustment device according to one of claims 1 to 7,
**characterised in that**
the base plate (80) has a rectangular outer contour.

## Revendications

1. Dispositif de réglage de siège en particulier de véhicule automobile comprenant une broche (5) pouvant être fixée à un premier rail (4) parmi deux rails (3, 4) réglables l'un par rapport à l'autre au moyen d'au moins un élément de fixation (60) situé à une extrémité de la broche (5) et appartenant au dispositif de réglage de siège, ainsi qu'une transmission (9) pouvant être entraînée par un moteur (2) qui peut être montée sur le second rail (3), l'élément de fixation (60) comportant une partie réalisée sous la forme d'une plaque de base (80) à partir de laquelle s'étendent vers le haut deux parois (92a, 92b) situées à distance l'une de l'autre, et au moins une extrémité (5a) de la broche (5) étant fixée entre ces deux parois (92a, 92b),
**caractérisé en ce que**
les deux parois (92a, 92b) sont deux branches longitudinales d'un étrier en forme de U (90) appartenant à l'élément de fixation (60), la plaque de base (80) comporte deux fentes (82a, 82b) situées à distance l'une de l'autre dont les axes s'étendent au moins approximativement parallèlement à l'axe de la broche (5), et l'étrier en forme de U (90) est glissé au travers des fentes (82a, 82b) à partir de la partie inférieure de la plaque de base (80) par ses deux branches longitudinales (92a, 92b) de sorte que la branche transversale (93) de l'étrier en forme de U (90) se trouve en appui contre la face inférieure de la plaque de base (80).

2. Dispositif de réglage de siège conforme à la revendication 1,
**caractérisé en ce que**
la longueur des parois (92a, 92b) est au moins approximativement égale, à la moitié de la longueur de la plaque de base (80).

3. Dispositif de réglage de siège conforme à la revendication 1 ou 2,
**caractérisé en ce que**
la plaque de base (80) comprend, sur sa face inférieure un évidement (83) dans lequel vient en prise la branche transversale (93) de l'étrier en forme de U (90) de sorte que l'élément de fixation (60) ait au moins approximativement une face inférieure plane.

4. Dispositif de réglage de siège conforme à la revendication 3,
**caractérisé en ce que**
la plaque de base (80) comporte, sur sa face supérieure, un bossage (84) qui est situé à l'opposé de l'évidement (83) de la face inférieure de cette plaque de base (80).

5. Dispositif de réglage de siège conforme à l'une des revendications
1 à 4,
**caractérisé en ce que**
la plaque de base (80) et l'étrier en forme de U (90) sont reliés solidairement en particulier soudés, collés, rivés ou goupillés.

6. Dispositif de réglage de siège conforme à l'une des revendications
1 à 5,
**caractérisé en ce que**
la plaque de base (80) et/ou l'étrier en forme de U (90) est(sont) réalisé(s) en métal, en particulier en acier, en tôle d'acier, en fonte métallique ou similaire.

7. Dispositif de réglage de siège conforme à l'une des revendications
1 à 6,
**caractérisé en ce que**
la plaque de base (80) comporte au moins un perçage (64a) de préférence deux perçages (64a, 64b) qui sont disposés côte à côte dans la direction de l'axe de la broche.

8. Dispositif de réglage de siège conforme à l'une des revendications
1 à 7,
**caractérisé en ce que**
la plaque de base (80) a un contour externe rectangulaire.
